# EUROPÄISCHE PATENTANMELDUNG

(11) **EP 4 488 079 A1**
(43) Veröffentlichungstag der Anmeldung: **08.01.2025**
(21) Anmeldenummer: 24181558.8
(22) Anmeldetag: 12.06.2024
(51) Int. Cl.: B60C 23/04

(54) **VERFAHREN ZUR STEUERUNG DES BETRIEBSMODUS EINER REIFENDRUCKKONTROLLVORRICHTUNG UND REIFENDRUCKKONTROLLVORRICHTUNG**

(30) Priorität: 03.07.2023 DE 102023206259
(71) Anmelder: Continental Reifen Deutschland GmbH, 30175 Hannover (DE)
(72) Erfinder: Sahlmüller, Baldo, 30175 Hannover (DE); Cyllik, Adrian, 30175 Hannover (DE)
(74) Vertreter: Continental Corporation

(57) **Zusammenfassung**

Die Erfindung betrifft ein Verfahren zur Steuerung des Betriebsmodus einer Reifendruckkontrollvorrichtung, wobei die Reifendruckkontrollvorrichtung an einem Fahrzeugrad montiert ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi einnehmen kann, wobei in einem ersten Betriebsmodus der Reifendruck wiederholt gemessen und in ersten Zeitabständen übermittelt wird und in einem zweiten Betriebsmodus der Reifendruck wiederholt gemessen und in zweiten Zeitabständen übermittelt wird, die kürzer als die ersten Zeitabstände sind und wobei eine Umschaltbedingung berechnet wird, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugt wird, welches die Reifendruckkontrollvorrichtung veranlasst, aus dem aktuellen Betriebsmodus in den anderen Betriebsmodus zu wechseln, wobei ein Timer mit einer vorgegebenen Laufzeit vorgesehen ist, der bei Berechnung der Umschaltbedingung gestartet wird und die Erzeugung des Umschaltsignals verzögert wird, bis die Laufzeit erreicht ist. Es wird ferner auch eine entsprechende Reifendruckkontrollvorrichtung angegeben.

## Beschreibung

Die Erfindung betrifft ein Verfahren zur Steuerung des Betriebsmodus einer Reifendruckkontrollvorrichtung, wobei die Reifendruckkontrollvorrichtung an einem Fahrzeugrad montiert ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi einnehmen kann, wobei in einem ersten Betriebsmodus der Reifendruck wiederholt gemessen und in ersten Zeitabständen übermittelt wird und in einem zweiten Betriebsmodus der Reifendruck wiederholt gemessen und in zweiten Zeitabständen übermittelt wird, die kürzer als die ersten Zeitabstände sind und wobei eine Umschaltbedingung berechnet wird, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugt wird, welches die Reifendruckkontrollvorrichtung veranlasst, aus dem aktuellen Betriebsmodus in den jeweils anderen Betriebsmodus zu wechseln.

Die Erfindung betrifft ferner auch eine Reifendruckkontrollvorrichtung, die zur Montage an einem an einem Fahrzeugrad bestimmt ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi aufweist, wobei in einem ersten Betriebsmodus der Reifendruck wiederholt messbar und in ersten Zeitabständen übermittelbar ist und in einem zweiten Betriebsmodus der Reifendruck wiederholt messbar und in zweiten Zeitabständen übermittelbar ist, die kürzer als die ersten Zeitabstände sind und wobei die Reifendruckkontrolleinrichtung dazu eingerichtet ist, eine Umschaltbedingung zu berechnen, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugbar ist, welches die Reifendruckkontrollvorrichtung veranlasst, aus dem aktuellen Betriebsmodus in den anderen Betriebsmodus zu wechseln.

Reifendruckkontrollvorrichtungen der eingangs genannten Art sind vielfältig bekannt und zählen als sogenannte TPMS-Sensoren mittlerweile zur Standardausstattung von Kraftfahrzeugen, insbesondere Personenkraftwagen. Sie verfügen über eine Druckmesseinrichtung zur Ermittlung des Reifendrucks und sind entweder an einer geeigneten Einbauposition beispielsweise auf der Innenoberfläche des am Fahrzeugrad verbauten Luftreifens oder im Bereich des Ventils angeordnet.

Die von der Druckmesseinrichtung ermittelten Reifendrücke werden in festgelegten Abständen wiederkehrend und üblicherweise drahtlos an eine am Kraftfahrzeug verbaute oder eine externe bzw. stationäre Empfangseinrichtung übermittelt. Bei einer am Kraftfahrzeug verbauten Empfangseinrichtung werden die übermittelten Reifendrücke in der Fahrzeugelektronik weiterverarbeitet, um beispielsweise den Reifendruck anzeigen zu können oder bei einem nicht korrekt eingestellten Fülldruck oder plötzlichem Druckverlust entsprechende Warnungen auszugeben. Die Reifendruckkontrollvorrichtung verfügt dazu über eine integrierte Stromversorgung, die von einer Batterie bereitgestellt wird, welche üblicherweise für eine bestimmte Nutzungsdauer oder Lebensdauer des zu überwachenden Fahrzeugrades ausgelegt ist.

Es ist bekannt, derartige Reifendruckkontrollvorrichtungen in verschiedenen Betriebsmodi zu betreiben. Dies dient dazu, zum einen die Sensorinformationen ausreichend oft zur Verfügung zu stellen, andererseits aber auch dazu, den Energiegehalt der Batterie möglichst zu schonen.

Aus der US 6,232,875 B1 ist es beispielsweise bekannt, die Sendeeinheit der Reifendruckkontrollvorrichtung in Abhängigkeit von einem ermittelten Bewegungsmuster zu steuern und bei bewegtem Fahrzeugrad einen anderen Betriebsmodus einzustellen als bei stehendem Fahrzeugrad.

Die WO 2017/050513 A1 offenbart eine Reifendruckkontrollvorrichtung, deren Betriebsmodi anhand des gemessenen Reifendrucks gewechselt werden.

Die Anzahl der unterschiedlichen Betriebsmodi, in denen eine Reifendruckkontrollvorrichtung betrieben werden kann, ist aufgrund von Limitierungen der integrierten Schaltkreise in der Reifendruckkontrollvorrichtung eingeschränkt. Es lässt sich jedoch bislang nicht vermeiden, dass ein bestimmter Betriebsmodus, der zur Übertragung von Sensorinformationen vorhanden ist und genutzt wird, aufgrund des individuellen Fahrverhaltens oder Fahrprofils zu häufig verwendet wird. Dies hat insbesondere nachteilige Auswirkungen auf die Batterielebensdauer der Reifendruckkontrollvorrichtung.

Aufgabe der Erfindung ist es, ein Verfahren zur Steuerung des Betriebsmodus einer Reifendruckkontrollvorrichtung sowie eine solche Reifendruckkontrollvorrichtung vorzuschlagen, die die Nachteile des Standes der Technik überwinden.

Zur Lösung der gestellten Aufgabe wird erfindungsgemäß die Ausgestaltung eines Verfahrens gemäß den Merkmalen des Patentanspruchs 1 vorgeschlagen.

Vorteilhafte Ausgestaltungen und Weiterbildungen des erfindungsgemäßen Verfahrens sind Gegenstand der abhängigen Ansprüche.

Eine Reifendruckkontrollvorrichtung zur Lösung der gestellten Aufgabe ist Gegenstand des Patentanspruchs 6.

Die Erfindung sieht zur Lösung der gestellten Aufgabe vor, dass ein Timer mit einer vorgegebenen Laufzeit vorgegeben ist, der bei Berechnung der Umschaltbedingung gestartet wird und die Erzeugung des Umschaltsignals für den Wechsel des Betriebsmodus so lange verzögert wird, bis die Laufzeit des Timers erreicht ist.

Auf diese Weise wird mit einer geringfügigen und auch in die begrenzten Schaltkreise einer Reifendruckkontrollvorrichtung problemlos implementierbaren Modifikation durch einen Timer der Wechsel des Betriebsmodus der Reifendruckkontrollvorrichtung an zwei unterschiedliche Bedingungen geknüpft, denn es muss sowohl eine Bewegungsänderung festgestellt werden als auch der definierte Timer abgelaufen sein, der bei Feststellen der Bewegungsänderung gestartet wird. Hierdurch wird der Wechsel des Betriebsmodus der Reifendruckkontrollvorrichtung bewusst verzögert.

Eine solche Verzögerung des Wechsels des Betriebsmodus durch den erfindungsgemäß vorgesehenen Timer stellt insbesondere in Situationen, in denen ein Betriebsmoduswechsel nur unter besonderen Voraussetzungen stattfinden soll, eine effektive Verlängerung der Batterielebensdauer sicher. Dies ist beispielsweise zur Unterscheidung von nur kurzfristigem Anhalten des Kraftfahrzeuges, beispielsweise vor einer Ampel, von einem längeren Halt des Kraftfahrzeuges sinnvoll. Durch den Timer werden erfindungsgemäß kurze Stopps, beispielsweise an Ampeln oder Bushaltestellen, von Wechseln des Betriebsmodus der Reifendruckkontrollvorrichtung ausgeschlossen. Dies ist insbesondere in den Fällen effektiv, in denen bei stehendem Kraftfahrzeug die Reifendruckkontrollvorrichtung in einen Betriebsmodus geschaltet wird, in welchem eine deutlich häufigere Übermittlung von Sensordaten an die Empfangseinrichtung erfolgen soll.

Nach einem Vorschlag der Erfindung wird nach Erzeugung des Umschaltsignals und dem entsprechenden Wechsel des Betriebsmodus der Timer wieder auf den Wert 0 gesetzt, sodass bei einem erneuten Wechsel des Bewegungsprofils der Timer mit der vorgesehenen Laufzeit neu gestartet werden kann und den Wechsel des Betriebsmodus entsprechend verzögert.

Nach einem weiteren Vorschlag der Erfindung wird während der Laufzeit des Timers, d. h. nach dessen Auslösung, der Fortbestand der Umschaltbedingung regelmäßig überwacht und bei einer Unterbrechung der Umschaltbedingung der Timer zurückgesetzt. Dies hat zur Folge, dass ein nur kurzzeitiges Bewegen des Fahrzeugs bei sich im Betriebsmodus entsprechend Stillstand des Fahrzeugs befindlichen Reifendruckkontrollvorrichtung, zum Beispiel ein Rangieren des Fahrzeuges mit anschließendem erneuten Stillstand oder ein nur kurzes Anhalten bei sich im Betriebsmodus entsprechend Fahren des Fahrzeuges befindlicher Reifendruckkontrollvorrichtung, zum Beispiel an einem Fußgängerüberweg, keinen Wechsel des Betriebsmodus hervorruft. Vielmehr wird bei einer Unterbrechung der Umschaltbedingung der Timer sofort auf den Wert 0 zurückgesetzt und beim Erreichen der nächsten Umschaltbedingung erneut mit der gesamten Laufzeit gestartet.

Die Laufzeit des Timers kann vom Fachmann in weiten Grenzen vorgegeben werden, wobei nach einem Vorschlag der Erfindung Laufzeiten zwischen etwa 30 bis 150 Sekunden, beispielsweise 32 oder 64 Sekunden, als sinnvoll angesehen werden.

Ebenso kann der zeitliche Abstand der Überwachung der Umschaltbedingung vom Fachmann in weiten Grenzen vorgegeben werden, wobei nach einem Vorschlag der Erfindung Laufzeiten zwischen etwa 5 und 40 Sekunden, beispielsweise 8 oder 16 Sekunden, als sinnvoll angesehen werden.

Es ist somit erfindungsgemäß möglich, die Zeitabstände zwischen einzelnen Übermittlungen von gemessenen Reifendrücken wie auch die Häufigkeit der durchgeführten Messung des Reifendrucks je nach Betriebsmodus zu variieren. Es wird in der Regel häufiger gemessen als gesendet, um mögliche Probleme schnell zu erkennen, aber den hohen Energieverbrauch durch das Senden zu vermeiden. Beispielhaft kann eine Messung des Reifendrucks unabhängig vom Betriebsmodus immer alle 16 Sekunden erfolgen. Die drahtlose Übermittlung bzw. das Senden des gemessenen Reifendrucks hingegen kann im ersten Betriebsmodus beispielhaft alle 128 Sekunden, im zweiten Betriebsmodus hingegen beispielhaft alle 32 Sekunden erfolgen.

Nach einem weiteren Vorschlag der Erfindung kann die Reifendruckkontrollvorrichtung auch einen Temperatursensor umfassen, um die aktuelle Temperatur des Fahrzeugrades festzustellen und zusätzlich zu dem ermittelten Reifendruck an die Empfangseinrichtung drahtlos zu übermitteln.

Die erfindungsgemäße Reifendruckkontrollvorrichtung, die zur Montage an einem an einem Fahrzeugrad bestimmt ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi aufweist, wobei in einem ersten Betriebsmodus der Reifendruck wiederholt messbar und in ersten Zeitabständen übermittelbar ist und in einem zweiten Betriebsmodus der Reifendruck wiederholt messbar und in zweiten Zeitabständen übermittelbar ist, die kürzer als die ersten Zeitabstände sind und wobei die Reifendruckkontrolleinrichtung dazu eingerichtet ist, eine Umschaltbedingung zu berechnen, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugbar ist, welches die Reifendruckkontrollvorrichtung veranlasst, aus dem aktuellen Betriebsmodus in den anderen Betriebsmodus zu wechseln, zeichnet sich dadurch aus, dass ein Timer mit einer vorgegebenen Laufzeit vorgesehen ist, der bei Berechnung der Umschaltbedingung aktivierbar ist, um die Erzeugung des Umschaltsignales bis zum Erreichen der Laufzeit zu verzögern.

Mit der erfindungsgemäßen Reifendruckkontrollvorrichtung und unter Anwendung des erfindungsgemäßen Verfahrens ist es möglich, die Reifendruckkontrollvorrichtung in mindestens zwei unterschiedlichen Betriebsmodi zu betreiben, wobei der Wechsel der Betriebsmodi situations- bzw. fahrprofilabhängig durchgeführt wird.

Beispielsweise befindet sich die erfindungsgemäße Reifendruckkontrollvorrichtung während des Stillstands eines Kraftfahrzeugs mit entsprechend stillstehenden Fahrzeugrädern in einem zweiten Betriebsmodus und während der Fahrt eines Kraftfahrzeuges mit entsprechend bewegten Fahrzeugrädern in einem ersten Betriebsmodus. In diesem zweiten Betriebsmodus sind die Zeitabstände, in welchen der Reifendruck ermittelt und drahtlos an die Empfangseinrichtung übermittelt wird, kürzer als im ersten Betriebsmodus.

Die Fahrt des Kraftfahrzeugs mit entsprechend bewegten Fahrzeugrädern wird über einen in der Reifendruckkontrollvorrichtung vorhandenen, insbesondere integrierten Beschleunigungssensor festgestellt und die Reifendruckkontrollvorrichtung in den ersten Betriebsmodus versetzt, bei welchem die ermittelten Messwerte für den Reifendruck und gegebenenfalls auch die Temperatur des Fahrzeugrades zum Beispiel alle 2 Minuten drahtlos an die Empfangseinrichtung des Kraftfahrzeuges übertragen werden.

Wird das Kraftfahrzeug angehalten, ermittelt die Reifendruckkontrollvorrichtung einen Beschleunigungswert unterhalb eines vorgebbaren definierten Referenzwertes, der beispielsweise bei 3 g oder jedem anderen geeigneten Wert festgelegt sein kann. Hieraus ermittelt die Reifendruckkontrolleinrichtung bei Unterschreiten des Referenzwertes eine Umschaltbedingung, jedoch wird das zugehörige Umschaltsignal, welches die Reifendruckkontrollvorrichtung veranlasst, in dem zweiten, dem Stillstand des Kraftfahrzeugs zugeordneten Betriebsmodus zu wechseln, noch nicht erzeugt. Vielmehr wird zunächst in der Reifendruckkontrollvorrichtung ein Timer gestartet, der eine definierte Laufzeit aufweist, beispielsweise 32 Sekunden oder 64 Sekunden.

Erreicht der Timer seine definierte Laufzeit, wird anhand der gegebenen Umschaltbedingung das Umschaltsignal erzeugt und die Reifendruckkontrollvorrichtung wechselt in den anderen, hier den zweiten Betriebsmodus, in welchem zum Zwecke einer verlässlicheren Datenübertragung die Sensorinformationen über den Reifendruck und/oder die Temperatur in kürzeren Zeitintervallen, zum Beispiel alle 16 oder alle 32 Sekunden an die Empfangseinrichtung übermittelt werden. Ein solcher Modus kann auch als Yardreader-Mode von einem externen Lesegerät besser genutzt werden. Sollte innerhalb der Laufzeit des Timers die Umschaltbedingung aufgehoben werden, beispielsweise indem das Kraftfahrzeug erneut in Bewegung gesetzt wird, wird der Timer gestoppt und auf 0 gesetzt und der Vorgang beginnt von neuem. Ein Wechsel des Betriebsmodus erfordert insoweit zwei Bedingungen, nämlich das Vorliegen der Umschaltbedingung, hier geringe oder keine Beschleunigung und auch das Erreichen der Laufzeit des gestarteten Timers.

Gleiches kann auch für den Wechsel der Reifendruckkontrollvorrichtung aus dem zweiten Betriebsmodus in den ersten Betriebsmodus vorgesehen werden, wobei die Umschaltbedingung dadurch eintritt und berechnet wird, dass der Beschleunigungssensor einen Messwert oberhalb des Referenzwertes feststellt und ebenfalls zunächst den Timer startet, um die Erzeugung des Umschaltsignals nach Maßgabe der Laufzeit des Timers zu verzögern. Ferner ist es auch möglich, zwischen mehr als den vorangehend erläuterten zwei unterschiedlichen Betriebsmodi umzuschalten.

## Patentansprüche

1. Verfahren zur Steuerung des Betriebsmodus einer Reifendruckkontrollvorrichtung, wobei die Reifendruckkontrollvorrichtung an einem Fahrzeugrad montiert ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi einnehmen kann, wobei in einem ersten Betriebsmodus der Reifendruck wiederholt gemessen und in ersten Zeitabständen übermittelt wird und in einem zweiten Betriebsmodus der Reifendruck wiederholt gemessen und in zweiten Zeitabständen übermittelt wird, die kürzer als die ersten Zeitabstände sind und wobei eine Umschaltbedingung berechnet wird, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugt wird, welches die Reifendruckkontrollvorrichtung veranlasst, aus dem aktuellen Betriebsmodus in den anderen Betriebsmodus zu wechseln, **dadurch gekennzeichnet, dass** ein Timer mit einer vorgegebenen Laufzeit vorgesehen ist, der bei Berechnung der Umschaltbedingung gestartet wird und die Erzeugung des Umschaltsignals verzögert wird, bis die Laufzeit erreicht ist.

2. Verfahren nach Anspruch 1, **dadurch gekennzeichnet, dass** nach Erzeugung des Umschaltsignals der Timer zurückgesetzt wird.

3. Verfahren nach einem der Ansprüche 1 oder 2, **dadurch gekennzeichnet, dass** während der Laufzeit der Fortbestand der Umschaltbedingung regelmäßig überwacht wird und bei einer Unterbrechung der Umschaltbedingung der Timer zurückgesetzt wird.

4. Verfahren nach einem der Ansprüche 1 bis 3, **dadurch gekennzeichnet, dass** die Laufzeit des Timers 30 bis 150 Sekunden beträgt.

5. Verfahren nach einem der Ansprüche 1 bis 4, **dadurch gekennzeichnet, dass** die Reifendruckkontrollvorrichtung einen Temperatursensor umfasst und die Übermittlungseinrichtung auch Temperaturmesswerte drahtlos an die Empfangseinrichtung übermittelt.

6. Reifendruckkontrollvorrichtung, die zur Montage an einem an einem Fahrzeugrad bestimmt ist und eine Druckmesseinrichtung zur Ermittlung des Reifendrucks, einen Beschleunigungssensor sowie eine Übermittlungseinrichtung zur drahtlosen Übermittlung von Reifendruckmesswerten an eine Empfangseinrichtung aufweist und mindestens zwei Betriebsmodi aufweist, wobei in einem ersten Betriebsmodus der Reifendruck wiederholt messbar und in ersten Zeitabständen übermittelbar ist und in einem zweiten Betriebsmodus der Reifendruck wiederholt messbar und in zweiten Zeitabständen übermittelbar ist, die kürzer als die ersten Zeitabstände sind und wobei die Reifendruckkontrolleinrichtung dazu eingerichtet ist, eine Umschaltbedingung zu berechnen, wenn im ersten Betriebsmodus der Beschleunigungssensor Messwerte unterhalb eines vorgegebenen Referenzwertes ermittelt und im zweiten Betriebsmodus der Beschleunigungssensor Messwerte oberhalb des Referenzwertes ermittelt und daraus ein Umschaltsignal erzeugbar ist, welches die Reifendruckkontrollvorrichtung veranlasst, aus dem aktuellen Betriebsmodus in den anderen Betriebsmodus zu wechseln, **dadurch gekennzeichnet, dass** ein Timer mit einer vorgegebenen Laufzeit vorgesehen ist, der bei Berechnung der Umschaltbedingung aktivierbar ist, um die Erzeugung des Umschaltsignales bis zum Erreichen der Laufzeit zu verzögern.
